# EUROPÄISCHE PATENTSCHRIFT

(11) **EP 3 414 637 B1**
(45) Veröffentlichungstag und Bekanntmachung des Hinweises auf die Patenterteilung: **04.10.2023**
(21) Anmeldenummer: 17703695.1
(22) Anmeldetag: 31.01.2017
(51) Int. Cl.: G05B 19/048, H01H 47/00, G05B 9/02

(54) **SICHERHEITSSCHALTVORRICHTUNG**
SAFETY SWITCHING APPARATUS
DISPOSITIF DE COMMUTATION DE SÉCURITÉ

(30) Priorität: 08.02.2016 DE 102016102150
(43) Veröffentlichungstag der Anmeldung: 19.12.2018
(73) Patentinhaber: Phoenix Contact GmbH & Co. KG, 32825 Blomberg (DE)
(72) Erfinder: GREGORIUS, Carsten, 31812 Bad Pyrmont (DE)
(74) Vertreter: Patentship Patentanwaltsgesellschaft mbH
(86) Internationale Anmeldenummer: PCT/EP2017/052047
(87) Internationale Veröffentlichungsnummer: WO 2017/137279

(56) Entgegenhaltungen:
- DE-A1- 10 011 211
- DE-A1- 10 020 075
- US-A1- 2009 008 232

## Beschreibung

Die vorliegende Erfindung betrifft eine Sicherheitsschaltvorrichtung zum sicheren Betreiben und Ansteuern einer Vielzahl von elektrischen Geräten.

Sicherheitsrelais und Sicherheitsschaltgeräte haben in verschiedenen Anwendungsgebieten, wie in der Überwachung der Sicherheit an elektrischen Geräten, eine große Bedeutung und dienen insbesondere zur Überwachung der an den Maschinen und Anlagen vorgesehenen Sicherheitseinrichtungen und zur schnellen und zuverlässigen Abschaltung von elektrischen Geräten im Notfall.

Aus dem Stand der Technik sind eine Vielzahl verschiedener Sicherheitsrelais und Sicherheitsschaltgeräte bekannt, wie beispielsweise ein- und zweikanalige Ausführungen zum Aufbau sicherheitsgerichteter Applikationen. Dabei überwacht eine interne Logik eines Sicherheitsrelais oder Sicherheitsschaltgeräts in der Regel einen Sicherheitskreis, wie beispielsweise Nothalt, Schutztür, Lichtschranken, Zweihandschaltung etc., und aktiviert im fehlerfreien Zustand einen sogenannten Freigabepfad, um beispielsweise ein elektrisches Gerät zu betreiben.

Im Falle des Ansprechens der Sicherheitsfunktion(en) eines Sicherheitsrelais oder Sicherheitsschaltgeräts wird der Freigabepfad eines Sicherheitsrelais oder Sicherheitsschaltgeräts abgeschaltet, also beispielsweise durch sofortige Abschaltung der Energiezufuhr oder Unterbrechung der Energiezufuhr, d.h. das Sicherheitsrelais oder das Sicherheitsschaltgerät bzw. der Freigabepfad wird deaktiviert und der Betrieb des elektrischen Geräts wird gestoppt, das mit dem Sicherheitsrelais oder dem Sicherheitsschaltgerät verknüpft ist.

Zum sicheren Betreiben einer Vielzahl von elektrischen Geräten kann eine entsprechende Vielzahl von Sicherheitsrelais oder Sicherheitsschaltgeräten eingesetzt werden, die in der Regel jedoch unabhängig voneinander arbeiten, d.h. die durch die entsprechenden Sicherheitsrelais oder Sicherheitsschaltgeräte definierten Sicherheitskreise sind nicht miteinander verknüpft. Dies lässt sich in der Regel nur mittels einer aufwändigeren speicherprogrammierbaren Steuerung (SPS) erreichen.

Aus dem Stand der Technik ist es bekannt, zur Funktionserweiterung von Sicherheitsrelais oder Sicherheitsschaltgeräten sogenannte Kontakterweiterungen zu verwenden, die in der Regel mit einem bestehenden Sicherheitsrelais oder Sicherheitsschaltgeräten querverdrahtet sind, um die Anzahl der Ausgänge zu erhöhen und somit mehr elektrische Geräte betreiben zu können. Eine solche Kontakterweiterung folgt jedoch lediglich der internen Sicherheitslogik des Sicherheitsrelais oder Sicherheitsschaltgeräts, mit dem diese Kontakterweiterung querverdrahtet ist.

Die Druckschrift DE 100 11 211 A1 offenbart ein Sicherheitsschaltgerät zum Schalten eines elektrischen Verbrauchers, über eine vorzugsweise externe und insbesondere elektromechanische Schaltvorrichtung. Das Sicherheitsschaltgerät umfasst ein erstes und ein zweites Schaltelement, eine erste und eine zweite Ausgangsklemme und zumindest eine Eingangsklemme für ein erstes Schaltsignal, das auf die Schaltelemente einwirkt. Die Erfindung betrifft ferner ein Sicherheitsschaltgerätesystem, das mehrere der vorgenannten Sicherheitsschaltgeräte umfasst.

Die Druckschrift DE 100 20 075 A1 offenbart eine Sicherheitsschaltgeräte-Modulanordnung mit Eingangsmodulen zum Verarbeiten von Signalen von einem Not-Aus-Schalter und von Schütz-Schaltern. Ferner umfasst die Sicherheitsschaltgeräte-Modulanordnung Ausgangsmodule zum Ansteuern von als Schützen ausgebildeten Aktoren, welche die Energieversorgung von Motoren herstellen oder unterbrechen können. Die Schalter sind hierarchisch aufgebaut.

Vor diesem Hintergrund besteht die der Erfindung zugrundeliegende Aufgabe darin, ein Konzept zur flexiblen Verwendung von Sicherheitsrelais oder Sicherheitsschaltgeräten beim sicheren Ansteuern von elektrischen Geräten zu schaffen.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Die Erfindung basiert auf der Erkenntnis, dass die obige Aufgabe durch eine modulare Sicherheitsschaltvorrichtung gelöst werden kann, die wenigstens zwei über ein Verbindungselement derart miteinander elektrisch verbundene Sicherheitsschaltmodule umfasst, dass das eine Sicherheitsschaltmodul dem anderen Sicherheitsschaltmodul signaltechnisch nachgelagert ist. Im Sinne der vorliegenden Erfindung bedeutet "signaltechnisch nachgelagert", dass die Sicherheitslogik des signaltechnisch nachgelagerten Sicherheitsschaltmoduls von dem Zustand des anderen Sicherheitsschaltmoduls abhängt.

Somit wird die Aufgabe durch eine modulare Sicherheitsschaltvorrichtung zum Ansteuern einer Vielzahl von elektrischen Geräten gemäß Anspruch 1 gelöst.

Dabei können die Sicherheitsschaltmodule als Sicherheitsrelais mit Relaisausgängen oder als Sicherheitsschaltgeräte mit Halbleiterausgängen ausgebildet sein.

Hierdurch wird ein Konzept zur flexiblen Verwendung von Sicherheitsrelais oder Sicherheitsschaltgeräten beim sicheren Ansteuern von elektrischen Geräten geschaffen. Aufgrund der modularen Bauweise der Sicherheitsschaltvorrichtung lassen sich auf einfache Art und Weise, mittels der Sicherheitsschaltmodule hierarchische Schutzkonzepte modular aufbauen, ohne dass die Sicherheitsschaltmodule aufwändig "querverdrahtet" werden müssen. Eine Konfiguration der modularen Sicherheitsschaltvorrichtung per Software, Schalter oder dergleichen ist nicht erforderlich.

Gemäß einer Ausführungsform umfasst die modulare Sicherheitsschaltvorrichtung ein drittes Sicherheitsschaltmodul mit einem dritten Schaltsignalausgang zum Ansteuern eines dritten elektrischen Geräts und ein weiteres Verbindungselement, welches ausgebildet ist, das zweite Sicherheitsschaltmodul mit dem dritten Sicherheitsschaltmodul elektrisch zu verbinden, und wobei das dritte Sicherheitsschaltmodul dem ersten Sicherheitsschaltmodul und dem zweiten Sicherheitsschaltmodul signaltechnisch nachgelagert ist, und wobei das zweite Sicherheitsschaltmodul ansprechend auf den Empfang des zweiten Steuersignals oder eines dritten Steuersignals deaktivierbar und ausgebildet ist, ein viertes Steuersignal an das dritte Sicherheitsschaltmodul anzulegen, um das dritte Sicherheitsschaltmodul zu deaktivieren.

Dadurch wird beispielsweise der Vorteil erreicht, dass auf einfache Art und Weise eine Anordnung von hierarchisch miteinander verknüpften Sicherheitsschaltmodulen bereitgestellt werden kann.

Gemäß einer Ausführungsform umfasst die modulare Sicherheitsschaltvorrichtung ein Trägerelement, insbesondere eine Hutschiene, und das zweite Sicherheitsschaltmodul ist zwischen dem ersten Sicherheitsschaltmodul und dem dritten Sicherheitsschaltmodul auf dem Trägerelement angeordnet.

Dadurch wird beispielsweise der Vorteil erreicht, dass sich die modulare Sicherheitsschaltvorrichtung leicht verbauen lässt, beispielsweise in einem Schaltschrank.

Gemäß einer Ausführungsform sind das Verbindungselement und das weitere Verbindungselement auf dem Trägerelement angeordnet und das erste Sicherheitsschaltmodul und das zweite Sicherheitsschaltmodul sind abnehmbar auf das Verbindungselement aufgesteckt und das zweite Sicherheitsschaltmodul und das dritte Sicherheitsschaltmodul sind abnehmbar auf das weitere Verbindungselement aufgesteckt.

Dadurch wird beispielsweise der Vorteil erreicht, dass die Sicherheitsschaltmodule leicht ausgetauscht werden können, um beispielsweise die modulare Sicherheitsschaltvorrichtung neu zu konfigurieren, d.h. die Hierarchie von Abhängigkeiten der Sicherheitsschaltmodule durch eine Neuanordnung auf der Hutschiene neu zu definieren.

Gemäß einer Ausführungsform ist das Verbindungselement Teil des ersten Sicherheitsschaltmoduls oder des zweiten Sicherheitsschaltmoduls und das weitere Verbindungselement ist Teil des zweiten Sicherheitsschaltmoduls oder des dritten Sicherheitsschaltmoduls.

Gemäß einer Ausführungsform ist das zweite Sicherheitsschaltmodul oder das dritte Sicherheitsschaltmodul als Kontakterweiterungsmodul ausgebildet.

Bei der Ausführungsform, bei der das dritte Sicherheitsschaltmodul als Kontakterweiterungsmodul ausgebildet ist, kann das Kontakterweiterungsmodul ausgebildet sein, ein Rückführungssignal über das weitere Verbindungselement an das zweite Sicherheitsschaltmodul anzulegen, und das zweite Sicherheitsschaltmodul ist ausgebildet, das Rückführungssignal über das Verbindungselement an das erste Sicherheitsschaltmodul anzulegen.

Gemäß einer Ausführungsform umfasst das Kontakterweiterungsmodul eine Anschlussbrücke.

Gemäß einer Ausführungsform umfasst das erste Sicherheitsschaltmodul einen Steuersignalausgang und das zweite Sicherheitsschaltmodul einen Steuersignaleingang und das Verbindungselement ist ausgebildet, den Steuersignalausgang des ersten Sicherheitsschaltmoduls mit dem Steuersignaleingang des zweiten Sicherheitsschaltmoduls elektrisch zu verbinden.

Gemäß einer Ausführungsform ist das erste Sicherheitsschaltmodul ausgebildet, ein an dem ersten Schaltsignalausgang anliegendes Schaltsignal als zweites Steuersignal an dem Steuersignalausgang des ersten Sicherheitsschaltmoduls anzulegen, und das zweite Sicherheitsschaltmodul ist ausgebildet, ein Schaltsignal an dem zweiten Schaltsignalausgang des zweiten Sicherheitsschaltmoduls anzulegen, welches auf dem an dem ersten Schaltsignalausgang anliegenden Schaltsignal und einem an einem Schaltsignaleingang des zweiten Sicherheitsschaltmoduls anliegenden Schaltsignal basiert.

Gemäß einer Ausführungsform umfasst das zweite Sicherheitsschaltmodul ein Sicherheitslogikelement, welches ausgebildet ist, das an dem ersten Schaltsignalausgang anliegende Schaltsignal mit dem an dem Schaltsignaleingang des zweiten Sicherheitsschaltmoduls anliegenden Schaltsignal mittels einer logischen "UND"-Operation oder einer logischen "ODER"-Operation zu verknüpfen, um das an dem zweiten Schaltsignalausgang anzulegende Schaltsignal zu generieren.

Gemäß einer Ausführungsform umfasst eines der Sicherheitsschaltmodule, insbesondere das erste Sicherheitsschaltmodul, eine Spannungsversorgungseinrichtung, um die Sicherheitsschaltmodule der modularen Sicherheitsschaltvorrichtung mit Spannung zu versorgen.

Gemäß einer Ausführungsform umfasst die Spannungsversorgungseinrichtung einen externen Versorgungsspannungseingang und einen externen Referenzspannungseingang.

Gemäß einer Ausführungsform umfasst das Verbindungselement einen ersten und zweiten internen Versorgungsspannungsanschluss und einen ersten und zweiten internen Referenzspannungsanschluss.

Ausführungsbeispiele der Erfindung sind in den Zeichnungen dargestellt und werden im Folgenden näher beschrieben.

Es zeigen:
- Fig. 1: ein schematisches Diagramm einer modularen Sicherheitsschaltvorrichtung gemäß einer Ausführungsform; und
- Fig. 2: ein schematisches Diagramm einer modularen Sicherheitsschaltvorrichtung gemäß einer weiteren Ausführungsform.

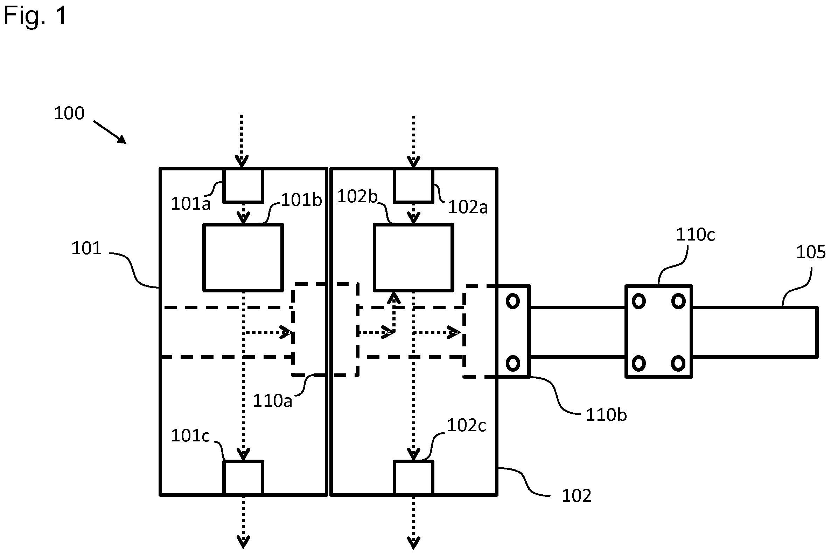

Figur 1 zeigt eine modulare Sicherheitsschaltvorrichtung 100 gemäß einer Ausführungsform. Die modulare Sicherheitsschaltvorrichtung 100 ist ausgebildet, eine Vielzahl von elektrischen Geräten, die beispielsweise Teil einer elektrischen Anlage sind, sicher anzusteuern bzw. zu betreiben. Hierzu umfasst die modulare Sicherheitsschaltvorrichtung 100 ein erstes Sicherheitsschaltmodul 101 und ein zweites Sicherheitsschaltmodul 102. Dabei können das erste Sicherheitsschaltmodul 101 und das zweite Sicherheitsschaltmodul 102 als Sicherheitsrelais mit Relaisausgängen oder als Sicherheitsschaltgerät mit Halbleiterausgängen ausgebildet sein.

In der in Figur 1 dargestellten Ausführungsform umfasst das erste Sicherheitsschaltmodul 101 einen Schaltsignaleingang 101a, ein Sicherheitslogikelement 101b und einen Schaltsignalausgang 101c. In der in Figur 1 dargestellten Ausführungsform umfasst auch das zweite Sicherheitsrelaismodul 102 einen Schaltsignaleingang 102a, ein Sicherheitslogikelement 102b und einen Schaltsignalausgang 102c. Der Schaltsignaleingang 101a kann einen oder mehrere Sicherheitskreise in dem Sicherheitslogikelement 101b verarbeiten. Liegt an dem Schaltsignaleingang 101a, 102a ein entsprechendes Signal an, z.B. ein Signal von einem "Not-Aus"-Schalter, kann das Sicherheitslogikelement 101a, 102a an dem Schaltsignalausgang 101b, 102b ein Signal anlegen, um beispielsweise ein mit dem Schaltsignalausgang 101b, 102b verbundenes elektrisches Gerät, z.B. einen Antrieb, auszuschalten.

Ferner umfasst die modulare Sicherheitsschaltvorrichtung 100 ein Verbindungselement 110a (in der schematischen Darstellung von Figur 1 durch das erste Sicherheitsschaltmodul 101 und das zweite Sicherheitsschaltmodul 102 verdeckt), welches ausgebildet ist, das erste Sicherheitsschaltmodul 101 mit dem zweiten Sicherheitsschaltmodul 102 elektrisch zu verbinden. Dabei ist das erste Sicherheitsschaltmodul 101 mittels des Verbindungselements 110a derart mit dem zweiten Sicherheitsschaltmodul 102 elektrisch verbunden, dass das zweite Sicherheitsschaltmodul 102 dem ersten Sicherheitsschaltmodul 101 signaltechnisch nachgeschaltet ist. Mit anderen Worten: in das Sicherheitslogikelement 102b des signaltechnisch nachgelagerten zweiten Sicherheitsschaltmoduls 102b fließt ein Signal des ersten Sicherheitsschaltmoduls 101 mit ein, wie dies in Figur 1 schematisch angedeutet ist und nachstehend detaillierter beschrieben wird.

Wie bereits vorstehend beschrieben, ist das erste Sicherheitsschaltmodul 101 ausgebildet, ansprechend auf den Empfang eines entsprechenden ersten Steuersignals, z.B. ein Signal eines "Not-Aus"-Tasters oder Schalters in den deaktivierten Zustand überzugehen, um beispielsweise ein mit dem Schaltsignalausgang 101c verbundenes elektrisches Gerät abzuschalten. Dabei ist das erste Sicherheitsschaltmodul 101 ferner ausgebildet, ein zweites Steuersignal an das zweite Sicherheitsschaltmodul 102 anzulegen, um das zweite Sicherheitsschaltmodul 102 zu deaktivieren und den Schaltsignalausgang 102c abzuschalten, wie dies in Figur 1 durch die gepunkteten Pfeile dargestellt ist.

Mit anderen Worten: gemäß einer Ausführungsform wird zusammen mit der Deaktivierung des ersten Sicherheitsschaltmoduls 101 auch das zweite Sicherheitsschaltmodul 102 deaktiviert, und zwar gemäß einer Ausführungsform unabhängig davon, welches Signal am Schaltsignaleingang 102a des zweiten Sicherheitsschaltmoduls 102 anliegt. Für den Fall, dass das erste Sicherheitsschaltmodul 101 nicht deaktiviert ist, kann das zweite Sicherheitsschaltmodul 102 dadurch deaktiviert werden, dass am Schaltsignaleingang 102a des zweiten Sicherheitsschaltmoduls 102 ein entsprechendes Signal angelegt wird, wie bereits vorstehend beschrieben. In diesem Fall wird der Schaltsignalausgang 101c des ersten Sicherheitsrelaismoduls 101 nicht abgeschaltet.

Bei der in Figur 1 dargestellten Ausführungsform kann das Anlegen eines zweiten Steuersignals an das zweite Sicherheitsschaltmodul 102 durch das erste Sicherheitsschaltmodul 101 über einen Steuersignalausgang des ersten Sicherheitsschaltmoduls 101 und einen Steuersignaleingang des zweiten Sicherheitsschaltmoduls 102 erfolgen, die mit entsprechenden Kontakten des Verbindungselements 110a verbunden sind.

Bei der in Figur 1 dargestellten Ausführungsform liegt das an dem Schaltsignalsaugang 101c des ersten Sicherheitsschaltmoduls 101 anliegende Schaltsignal auch an dem Verbindungselement 110a und somit auch am Steuersignaleingang des zweiten Sicherheitsschaltmoduls 102 an. Wie bereits vorstehend beschrieben, stellt dieses am Steuersignaleingang des zweiten Sicherheitsschaltmoduls 102 anliegende Schaltsignal neben dem Signal, das am Schaltsignaleingang 102a anliegt, ein zweites Steuersignal für das zweite Sicherheitsschaltmodul 102 dar. Auf der Grundlage dieser beiden Signale generiert das Sicherheitslogikelement 102b des zweiten Sicherheitsschaltmoduls 102 ein Schaltsignal, das an den Schaltsignalausgang 102c des zweiten Sicherheitsschaltmoduls 102 angelegt wird. Insbesondere kann das Sicherheitslogikelement 102b des zweiten Sicherheitsrelaismoduls 102 ausgebildet sein, die beiden Signale mittels einer logischen "UND"-Operation oder einer logischen "ODER"-Operation zu verknüpfen, um das Schaltsignal zu generieren, das an dem Schaltsignalausgang 102c des zweiten Sicherheitsschaltmoduls 102 angelegt wird.

Mit anderen Worten: bei der in Figur 1 dargestellten Ausführungsform kann das erste Sicherheitsschaltmodul 101 ausgebildet sein, das an dem ersten Schaltsignalausgang 101c anliegende Schaltsignal auch als zweites Steuersignal an dem Steuersignalausgang des ersten Sicherheitsschaltmoduls 101 anzulegen, und das zweite Sicherheitsschaltmodul 102 kann ausgebildet sein, mittels des Sicherheitslogikelements 102b ein Schaltsignal an dem Schaltsignalausgang 102c des zweiten Sicherheitsschaltmoduls 102 anzulegen, welches auf dem an dem ersten Schaltsignalausgang 101c anliegenden Schaltsignal, welches dem zweiten Steuersignal entspricht, und einem an dem Schaltsignaleingang 102a des zweiten Sicherheitsschaltmoduls 102 anliegenden Schaltsignal basiert.

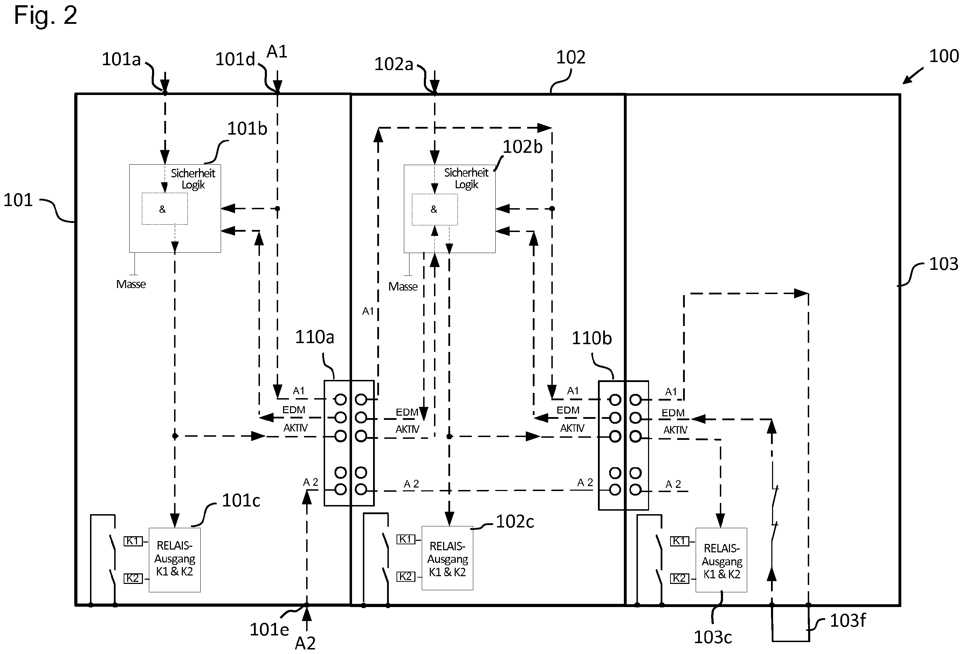

Erfindungsgemäß ist das erste Sicherheitsschaltmodul 101 ausgebildet, ein einkanaliges Aktiv-Schaltsignal (AKTIV) an den ersten Schaltsignalausgang 101c des ersten Sicherheitsschaltmoduls 101 und über das Verbindungselement 110a an das zweite Sicherheitsschaltmodul 102 anzulegen, wie in Figur 2 dargestellt.

In der in Figur 1 dargestellten Ausführungsform ist das erste Sicherheitsschaltmodul 101 abnehmbar auf dem Verbindungselement 110a aufgesteckt und das zweite Sicherheitsschaltmodul 102 ist abnehmbar auf dem Verbindungselement 110a und einem weiteren Verbindungselement 110b aufgesteckt. Hierzu können das Verbindungselement 110a und das weitere Verbindungselement 110b mit Kontaktstiften ausgebildet sein, wie dies in Figur 1 bei dem weiteren Verbindungselement 110b schematisch angedeutet ist, die in entsprechende Kontakthülsen an der jeweiligen Unterseite des ersten Sicherheitsschaltmoduls 101 und des zweiten Sicherheitsschaltmoduls 102 eingebracht werden können.

Das Verbindungselement 110a und das weitere Verbindungselement 110b wiederum können auf einem Trägerelement, insbesondere einer Hutschiene 105, angebracht oder montiert sein. Wie in Figur 1 dargestellt, kann die Hutschiene 105 mit wenigstens einem weiteren Verbindungselement 110c ausgebildet sein, um Steckplätze für weitere Sicherheitsschaltmodule auf der Hutschiene 105 bereitzustellen, beispielsweise für ein drittes Sicherheitsschaltmodul 103, wie dies in Figur 2 dargestellt ist, zum Ansteuern eines dritten elektrischen Geräts.

Gemäß einer Ausführungsform kann das Verbindungselement 110a auch Teil des ersten Sicherheitsschaltmoduls 101 oder des zweiten Sicherheitsschaltmoduls 102 sein und das weitere Verbindungselement 110b kann Teil des zweiten Sicherheitsschaltmoduls 102 sein.

Beispielsweise könnte bei der in Figur 1 dargestellten Ausführungsform ein zu dem zweiten Sicherheitsschaltmodul 102 identisches drittes Sicherheitsschaltmodul 103 auf der Hutschiene 105 neben dem zweiten Sicherheitsrelaismodul 102 auf das weitere Verbindungselement 110b und das noch weitere Verbindungselement 110c aufgesteckt werden. In einer solchen Ausführungsform, bei der das zweite Sicherheitsschaltmodul 102 über das weitere Verbindungselement 110b elektrisch mit dem dritten Sicherheitsschaltmodul 103 verbunden ist, ist das dritte Sicherheitsschaltmodul 103 dem ersten Sicherheitsschaltmodul 101 und dem zweiten Sicherheitsschaltmodul 102 signaltechnisch nachgelagert.

Dabei kann, wie vorstehend bereits beschrieben, das zweite Sicherheitsschaltmodul 102 ansprechend auf den Empfang des zweiten Steuersignals, das über das Verbindungselement 110a vom ersten Sicherheitsschaltmodul 101 übermittelt wird, oder eines Steuersignals deaktiviert werden, das am Schaltsignaleingang 102a des zweiten Sicherheitsschaltmoduls 102 anliegt, beispielsweise eines Signals von einer Schutzgittereinrichtung. Das zweite Sicherheitsschaltmodul 102 ist dazu ausgebildet, ein drittes Steuersignal an das dritte Sicherheitsschaltmodul 103 anzulegen (und zwar über das in Figur 1 dargestellte weitere Verbindungselement 110b), um das dritte Sicherheitsrelaismodul 103 zu deaktivieren.

Durch die vorstehend beschriebene Ausgestaltung der Sicherheitsschaltmodule 101, 102, 103 der modularen Sicherheitsschaltvorrichtung 100 gemäß einer Ausführungsform wird somit erreicht, dass zusammen mit der Deaktivierung des ersten Sicherheitsschaltmoduls 101 auch das zweite Sicherheitsschaltmodul 102 und das dritte Sicherheitsschaltmodul 103 deaktiviert werden kann, und zwar in einer Ausführungsform unabhängig davon, was für ein Signal am Schaltsignaleingang 102a des zweiten Sicherheitsschaltmoduls 102 oder an einem entsprechenden Schaltsignaleingang des dritten Sicherheitsschaltmoduls 103 anliegt.

Ferner wird mir der Ausgestaltung gemäß dieser Ausführungsform erreicht, dass zusammen mit der Deaktivierung des zweiten Sicherheitsschaltmoduls 102 auch das dritte Sicherheitsschaltmodul 103 deaktiviert wird. Erfindungsgemäß ist jedoch die Funktionsweise des ersten Sicherheitsschaltmoduls 101 völlig unabhängig vom Zustand des zweiten Sicherheitsschaltmoduls 102 und von weiteren auf der Hutschiene 105 angeordneten Sicherheitsschaltmodulen, welche die vorstehend beschriebene Grundfunktionalität des zweiten Sicherheitsschaltmoduls 102 aufweisen.

Aufgrund der vorstehend beschriebenen erfindungsgemäßen Ausgestaltung der Sicherheitsschaltmodule 101, 102, 103 der modularen Sicherheitsschaltvorrichtung 100 ist es somit möglich, eine Hierarchie von Abhängigkeiten zwischen den einzelnen Sicherheitsschaltmodulen 101, 102, 103 zu definieren, die bei der in Figur 1 dargestellten Ausführungsform von dem Steckplatz auf der Hutschiene 105 abhängen, auf den ein jeweiliges Sicherheitsschaltmodul 101, 102, 103 aufgesteckt ist. Bei der in Figur 1 dargestellten Ausführungsform hat das am linken Ende der Hutschiene 105 aufgesteckte erste Sicherheitsschaltmodul 101 die oberste Priorität, da es Einfluss auf das Ausgangssignal aller auf der Hutschiene 105 rechts davon angeordneten Sicherheitsschaltmodule hat.

Figur 2 zeigt eine weitere Ausführungsform einer modularen Sicherheitsschaltvorrichtung 100. Bei der in Figur 2 dargestellten Ausführungsform der modularen Sicherheitsschaltvorrichtung 100 ist das dritte Sicherheitsschaltmodul 103 als ein Kontakterweiterungsmodul ausgebildet. Dabei ist das Kontakterweiterungsmodul 103 ausgebildet, ein Rückführungssignal (in Figur 2 als "EDM"-Signal gekennzeichnet) über das weitere Verbindungselement 110b an das zweite Sicherheitsschaltmodul 102 anzulegen, und das zweite Sicherheitsschaltmodul 102 ist ausgebildet, das Rückführungssignal über das Verbindungselement 110a an das erste Sicherheitsschaltmodul 101 anzulegen. Das Kontakterweiterungsmodul 103 kann eine Anschlussbrücke 103f umfassen. Selbstverständlich kann statt des dritten Sicherheitsschaltmoduls 103 auch das zweite Sicherheitsschaltmodul 102 als Kontakterweiterungsmodul ausgebildet sein.

Bei der in Figur 2 dargestellten Ausführungsform kann das erste Sicherheitsschaltmodul 101 eine Spannungsversorgungseinrichtung zum Betreiben aller Sicherheitsschaltmodule 101, 102, 103 der modularen Sicherheitsschaltvorrichtung 100 mittels einer externen Spannungsquelle umfassen. Die Spannungsversorgungseinrichtung umfasst einen externen Versorgungsspannungseingang 101d und einen externen Referenzspannungseingang (Masse) 101e. Entsprechend können das Verbindungselement 110a und das weitere Verbindungselement 110b einen ersten und zweiten internen Versorgungsspannungsanschluss und einen ersten und zweiten internen Referenzspannungsanschluss umfassen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Modulare Sicherheitsschaltvorrichtung

- 101: Sicherheitsschaltmodul
- 101a: Schaltsignaleingang
- 101b: Sicherheitslogikelement
- 101c: Schaltsignalausgang
- 101d: Versorgungsspannungseingang
- 101e: Referenzspannungseingang

- 102: Sicherheitsschaltmodul
- 102a: Schaltsignaleingang
- 102b: Sicherheitslogikelement
- 102c: Schaltsignalausgang

- 103: Sicherheitsschaltmodul
- 103c: Schaltsignalausgang
- 103f: Abschlussbrücke

- 105: Trägerelement

- 110a-c: Verbindungselemente

## Patentansprüche

1. Modulare Sicherheitsschaltvorrichtung (100) zum Ansteuern einer Vielzahl von elektrischen Geräten mit:
einem ersten Sicherheitsschaltmodul (101) mit einem ersten Schaltsignalausgang (101c) zum Ansteuern eines ersten elektrischen Gerätes;
einem zweiten Sicherheitsschaltmodul (102) mit einem zweiten Schaltsignalausgang (102c) zum Ansteuern eines zweiten elektrischen Gerätes; und
einem Verbindungselement (110a), welches ausgebildet ist, das erste Sicherheitsschaltmodul (101) mit dem zweiten Sicherheitsschaltmodul (102) elektrisch zu verbinden;
wobei das zweite Sicherheitsschaltmodul (102) dem ersten Sicherheitsschaltmodul (101) signaltechnisch nachgeschaltet ist, und wobei das erste Sicherheitsschaltmodul (101) ansprechend auf den Empfang eines ersten Steuersignals deaktivierbar und ausgebildet ist, ein zweites Steuersignal an das zweite Sicherheitsschaltmodul (102) anzulegen, um das zweite Sicherheitsschaltmodul (102) zu deaktivieren,
wobei das erste Sicherheitsschaltmodul (101) ausgebildet ist, ansprechend auf den Empfang des ersten Steuersignals das mit dem ersten Schaltsignalausgang (101c) verbundene erste elektrische Gerät abzuschalten, und
wobei das erste Sicherheitsschaltmodul (101) ferner ausgebildet ist, ansprechend auf den Empfang des ersten Steuersignals den zweiten Schaltsignalausgang (102c) des zweiten Sicherheitsschaltmoduls (102) abzuschalten,
**dadurch gekennzeichnet, dass** das erste Sicherheitsschaltmodul (101) ausgebildet ist, ein einkanaliges Aktiv-Schaltsignal (AKTIV) an den ersten Schaltsignalausgang (101c) des ersten Sicherheitsschaltmoduls (101) und über das Verbindungselement (110a) an das zweite Sicherheitsschaltmodul (102) anzulegen.

2. Modulare Sicherheitsschaltvorrichtung (100) nach Anspruch 1, wobei die modulare Sicherheitsschaltvorrichtung (100) ein drittes Sicherheitsschaltmodul (103) mit einem dritten Schaltsignalausgang (103c) zum Ansteuern eines dritten elektrischen Geräts und ein weiteres Verbindungselement (110b) umfasst, welches ausgebildet ist, das zweite Sicherheitsschaltmodul (102) mit dem dritten Sicherheitsschaltmodul (103) elektrisch zu verbinden, und wobei das dritte Sicherheitsschaltmodul (103) dem ersten Sicherheitsschaltmodul (101) und dem zweiten Sicherheitsschaltmodul (102) signaltechnisch nachgelagert ist, und wobei das zweite Sicherheitsschaltmodul (102) ansprechend auf den Empfang des zweiten Steuersignals oder eines dritten Steuersignals deaktivierbar und ausgebildet ist, ein viertes Steuersignal an das dritte Sicherheitsschaltmodul (103) anzulegen, um das dritte Sicherheitsschaltmodul (103) zu deaktivieren.

3. Modulare Sicherheitsschaltvorrichtung (100) nach Anspruch 2, wobei die modulare Sicherheitsschaltvorrichtung (100) ein Trägerelement (105), insbesondere eine Hutschiene umfasst, und wobei das zweite Sicherheitsschaltmodul (102) zwischen dem ersten Sicherheitsschaltmodul (101) und dem dritten Sicherheitsschaltmodul (103) auf dem Trägerelement (105) angeordnet ist.

4. Modulare Sicherheitsschaltvorrichtung (100) nach Anspruch 3, wobei das Verbindungselement (110a) und das weitere Verbindungselement (110b) auf dem Trägerelement (105) angeordnet sind und wobei das erste Sicherheitsschaltmodul (101) und das zweite Sicherheitsschaltmodul (102) abnehmbar auf das Verbindungselement (110a) aufgesteckt sind und das zweite Sicherheitsschaltmodul (102) und das dritte Sicherheitsschaltmodul (103) abnehmbar auf das weitere Verbindungselement (110b) aufgesteckt sind.

5. Modulare Sicherheitsschaltvorrichtung (100) nach Anspruch 2, wobei das Verbindungselement (110a) Teil des ersten Sicherheitsschaltmoduls (101) oder des zweiten Sicherheitsschaltmoduls (102) ist und das weitere Verbindungselement (110b) Teil des zweiten Sicherheitsschaltmoduls (102) oder des dritten Sicherheitsschaltmoduls (103) ist.

6. Modulare Sicherheitsschaltvorrichtung (100) nach einem der Ansprüche 2 bis 5, wobei das zweite Sicherheitsschaltmodul (102) oder das dritte Sicherheitsschaltmodul (103) als Kontakterweiterungsmodul ausgebildet ist.

7. Modulare Sicherheitsschaltvorrichtung (100) nach Anspruch 6, wobei das dritte Sicherheitsschaltmodul (103) als Kontakterweiterungsmodul (103) ausgebildet ist und wobei das Kontakterweiterungsmodul (103) ausgebildet ist, ein Rückführungssignal über das weitere Verbindungselement (110b) an das zweite Sicherheitsrelaismodul (102) anzulegen, und wobei das zweite Sicherheitsrelaismodul (102) ausgebildet ist, das Rückführungssignal über das Verbindungselement (110a) an das erste Sicherheitsrelaismodul (101) anzulegen.

8. Modulare Sicherheitsschaltvorrichtung (100) nach Anspruch 6 oder 7, wobei das Kontakterweiterungsmodul (103) eine Anschlussbrücke (103f) umfasst.

9. Modulare Sicherheitsschaltvorrichtung (100) nach einem der vorstehenden Ansprüche, wobei das erste Sicherheitsschaltmodul (101) einen Steuersignalausgang umfasst und das zweite Sicherheitsrelaismodul (102) einen Steuersignaleingang umfasst und wobei das Verbindungselement (110a) ausgebildet ist, den Steuersignalausgang des ersten Sicherheitsschaltmoduls (101) mit dem Steuersignaleingang des zweiten Sicherheitsschaltmoduls (102) elektrisch zu verbinden.

10. Modulare Sicherheitsschaltvorrichtung (100) nach Anspruch 9, wobei das erste Sicherheitsschaltmodul (101) ausgebildet ist, ein an dem ersten Schaltsignalausgang (101c) anliegendes Schaltsignal als zweites Steuersignal an dem Steuersignalausgang des ersten Sicherheitsschaltmoduls (101) anzulegen, und wobei das zweite Sicherheitsschaltmodul (102) ausgebildet ist, ein Schaltsignal an dem zweiten Schaltsignalausgang (102c) des zweiten Sicherheitsschaltmoduls (102) anzulegen, welches auf dem an dem ersten Schaltsignalausgang (101c) anliegenden Schaltsignal und einem an einem Schaltsignaleingang (102a) des zweiten Sicherheitsschaltmoduls (102) anliegenden Schaltsignal basiert.

11. Modulare Sicherheitsschaltvorrichtung (100) nach Anspruch 10, wobei das zweite Sicherheitsschaltmodul (102) ein Sicherheitslogikelement (102b) umfasst, welches ausgebildet ist, das an dem ersten Schaltsignalausgang (101c) anliegende Schaltsignal mit dem an dem Schaltsignaleingang (102a) des zweiten Sicherheitsschaltmoduls (102) anliegenden Schaltsignal mittels einer logischen "UND"-Operation oder logischen "ODER"-Operation zu verknüpfen, um das an dem zweiten Schaltsignalausgang (102c) anzulegende Schaltsignal zu generieren.

12. Modulare Sicherheitsschaltvorrichtung (100) nach einem der vorstehenden Ansprüche, wobei eines der Sicherheitsschaltmodule, insbesondere das erste Sicherheitsschaltmodul (101), eine Spannungsversorgungseinrichtung (101d,e) umfasst, um die Sicherheitsschaltmodule der modularen Sicherheitsschaltvorrichtung (100) mit Spannung zu versorgen.

13. Modulare Sicherheitsschaltvorrichtung (100) nach Anspruch 12, wobei die Spannungsversorgungseinrichtung (101d,e) einen externen Versorgungsspannungseingang (101d) und einen externen Referenzspannungseingang (101e) umfasst.

14. Modulare Sicherheitsschaltvorrichtung (100) nach Anspruch 12 oder 13, wobei das Verbindungselement (110a) einen ersten und zweiten internen Versorgungsspannungsanschluss und einen ersten und zweiten internen Referenzspannungsanschluss umfasst.

## Claims

1. A modular safety switching apparatus (100) for controlling a plurality of electrical devices comprising:
a first safety switching module (101) comprising a first switching signal output (101c) for controlling a first electrical device;
a second safety switching module (102) comprising a second switching signal output (102c) for controlling a second electrical device; and
a connection element (110a), which is configured to electrically connect the first safety switching module (101) to the second safety switching module (102);
wherein the second safety switching module (102) with respect to signal transmission is downstream of the first safety switching module (101), and wherein the first safety switching module (101) can be deactivated in response to receiving a first control signal and is configured to feed a second control signal to the second safety switching module (102) in order to deactivate the second safety switching module (102),
wherein the first safety switching module (101) is configured to deactivate the first electrical device connected to the first switching signal output (101c) in response to receiving the first control signal, and
wherein the first safety switching module (101) is further configured to deactivate the second switching signal output (102c) of the second safety switching module (102) in response to receiving the first control signal,
**characterized in that** the first safety switching module (101) is configured to feed a single-channel active control signal (AKTIV) to the first switching signal output (101c) of the first safety switching module (101) and via the connection element (110a) to the second safety switching module (102).

2. The modular safety switching apparatus (100) according to claim 1, wherein the modular safety switching apparatus (100) comprises a third safety switching module (103) comprising a third switching signal output (103c) for controlling a third electrical device and a further connection element (110b) configured to electrically connect the second safety switching module (102) to the third safety switching module (103), and wherein the third safety switching module (103) with respect to signal transmission is downstream of the first safety switching module (101) and the second safety switching module (102), and wherein the second safety switching module (102) can be deactivated in response to receiving the second control signal or a third control signal and is configured to feed a fourth control signal to the third safety switching module (103) in order to deactivate the third safety switching module (103).

3. The modular safety switching apparatus (100) according to claim 2, wherein the modular safety switching apparatus (100) comprises a support element (105), in particular a DIN rail, and wherein the second safety switching module (102) is arranged on the support element (105) between the first safety switching module (101) and the third safety switching module (103).

4. The modular safety switching apparatus (100) according to claim 3, wherein the connection element (110a) and the further connection element (110b) are arranged on the support element (105) and wherein the first safety switching module (101) and the second safety switching module (102) are detachably connected to the connection element (110a) and the second safety switching module (102) and the third safety switching module (103) are detachably connected to the further connection element (110b).

5. The modular safety switching apparatus (100) according to claim 2, wherein the connection element (110a) is part of the first safety switching module (101) or the second safety switching module (102) and the further connection element (11 0b) is part of the second safety switching module (102) or the third safety switching module (103).

6. The modular safety switching apparatus (100) according to one of claims 2 to 5, wherein the second safety switching module (102) or the third safety switching module (103) is configured as a contact extension module.

7. The modular safety switching apparatus (100) according to claim 6, wherein the third safety switching module (103) is configured as a contact extension module (103) and wherein the contact extension module (103) is configured to feed a feedback signal to the second safety switching module (102) via the further connection element (11 0b), and wherein the second safety switching module (102) is configured to feed the feedback signal to the first safety switching module (101) via the connection element (110a).

8. The modular safety switching apparatus (100) according to claim 6 or 7, wherein the contact extension module (103) comprises a contact bridge (103f).

9. The modular safety switching apparatus (100) according to one of the preceding claims, wherein the first safety switching module (101) comprises a control signal output and the second safety switching module (102) comprises a control signal input and wherein the connection element (110a) is configured to electrically connect the control signal output of the first safety switching module (101) to the control signal input of the second safety switching module (102).

10. The modular safety switching apparatus (100) according to claim 9, wherein the first safety switching module (101) is configured to feed a switching signal fed to the first switching signal output (101c) to the control signal output of the first safety switching module (101) as a second control signal, and wherein the second safety switching module (102) is configured to feed a switching signal to the second switching signal output (102c) of the second safety switching module (102) which is based on the switching signal fed to the first switching signal output (101c) and a switching signal fed to a switching signal input (102a) of the second safety switching module (102).

11. The modular safety switching apparatus (100) according to claim 10, wherein the second safety switching module (102) comprises a safety logic element (102b) which is configured to link the switching signal fed to the first switching signal output (101c) to the switching signal fed to the switching signal input (102a) of the second safety switching module (102) by means of a logical AND operation or a logical OR operation in order to generate the switching signal to be fed to the second switching signal output (102c).

12. The modular safety switching apparatus (100) according to one of the preceding claims, wherein one of the safety switching modules, in particular the first safety switching module (101), comprises a power supply device (101d,e) in order to supply voltage to the safety switching modules of the modular safety switching apparatus (100).

13. The modular safety switching apparatus (100) according to claim 12, wherein the power supply device (101d,e) comprises an external supply voltage input (101d) and an external reference voltage input (101e).

14. The modular safety switching apparatus (100) according to claim 12 or 13, wherein the connection element (110a) comprises a first and second internal supply voltage connection and a first and second internal reference voltage connection.

## Revendications

1. Appareil de commutation de sécurité modulaire (100) pour commander une pluralité de dispositifs électriques comprenant :
un premier module de commutation de sécurité (101) comprenant une première sortie de signal de commutation (101c) pour commander un premier dispositif électrique ;
un deuxième module de commutation de sécurité (102) comprenant une deuxième sortie de signal de commutation (102c) pour commander un deuxième appareil électrique; et
un élément de connexion (110a), qui est configuré pour connecter électriquement le premier module de commutation de sécurité (101) au deuxième module de commutation de sécurité (102);
dans lequel le deuxième module de commutation de sécurité (102) est en aval dans la transmission de signal vers le premier module de commutation de sécurité (101), et dans lequel le premier module de commutation de sécurité (101) peut être désactivé en réponse à la réception d'un premier signal de commande et est configuré pour alimenter un deuxième signal de commande au deuxième module de commutation de sécurité (102) afin de désactiver le deuxième module de commutation de sécurité (102),
dans lequel le premier module de commutation de sécurité (101) est configuré pour désactiver le premier appareil électrique connecté à la première sortie de signal de commutation (101c) en réponse à la réception du premier signal de commande, et
dans lequel le premier module de commutation de sécurité (101) est en outre configuré pour désactiver la deuxième sortie de signal de commutation (102c) du deuxième module de commutation de sécurité (102) en réponse à la réception du premier signal de commande,
**caractérisé en ce que** le premier module de commutation de sécurité (101) est configuré pour fournir un signal de commande actif monocanal (AKTIV) à la première sortie de signal de commutation (101c) du premier module de commutation de sécurité (101) et via l'élément de connexion (110a) au deuxième module de commutation de sécurité (102).

2. Appareil de commutation de sécurité modulaire (100) selon la revendication 1, dans lequel l'appareil de commutation de sécurité modulaire (100) comprend un troisième module de commutation de sécurité (103) comprenant une troisième sortie de signal de commutation (103c) pour commander un troisième appareil électrique et un un autre élément de connexion (110b) configuré pour connecter électriquement le deuxième module de commutation de sécurité (102) au troisième module de commutation de sécurité (103), et dans lequel le troisième module de commutation de sécurité (103) est en aval dans la transmission de signal au premier module de commutation de sécurité (101) et le deuxième module de commutation de sécurité (102), et dans lequel le deuxième module de commutation de sécurité (102) peut être désactivé en réponse à la réception du deuxième signal de commande ou d'un troisième signal de commande et est configuré pour fournir un quatrième signal de commande au troisième module de commutation de sécurité (103) afin de désactiver le troisième module de commutation de sécurité (103).

3. Appareil de commutation de sécurité modulaire (100) selon la revendication 2, dans lequel l'appareil de commutation de sécurité modulaire (100) comprend un élément de support (105), en particulier un rail DIN, et dans lequel le deuxième module de commutation de sécurité (102) est agencé sur l'élément de support (105) entre le premier module de commutation de sécurité (101) et le troisième module de commutation de sécurité (103).

4. Appareil de commutation de sécurité modulaire (100) selon la revendication 3, dans lequel l'élément de connexion (110a) et l'autre élément de connexion (110b) sont agencés sur l'élément de support (105) et dans lequel le premier module de commutation de sécurité (101) et le deuxième module de commutation de sécurité (102) est connecté de manière amovible à l'élément de connexion (110a) et le deuxième module de commutation de sécurité (102) et le troisième module de commutation de sécurité (103) sont connectés de manière amovible à l'autre élément de connexion (110b).

5. Appareil de commutation de sécurité modulaire (100) selon la revendication 2, dans lequel l'élément de connexion (110a) fait partie du premier module de commutation de sécurité (101) ou du deuxième module de commutation de sécurité (102) et l'autre élément de connexion (110b) fait partie du deuxième module de commutation de sécurité (102) ou du troisième module de commutation de sécurité (103).

6. Appareil de commutation de sécurité modulaire (100) selon l'une des revendications 2 à 5, dans lequel le deuxième module de commutation de sécurité (102) ou le troisième module de commutation de sécurité (103) est configuré comme un module d'extension de contact.

7. Appareil de commutation de sécurité modulaire (100) selon la revendication 6, dans lequel le troisième module de commutation de sécurité (103) est configuré comme un module d'extension de contact (103) et dans lequel le module d'extension de contact (103) est configuré pour fournir un signal de retour au deuxième module de commutation de sécurité (102) via l'autre élément de connexion (110b), et dans lequel le deuxième module de commutation de sécurité (102) est configuré pour fournir le signal de retour au premier module de commutation de sécurité (101) via l'élément de connexion (110a).

8. Appareil de commutation de sécurité modulaire (100) selon la revendication 6 ou 7, dans lequel le module d'extension de contact (103) comprend un pont de contact (103f).

9. Appareil de commutation de sécurité modulaire (100) selon l'une des revendications précédentes, dans lequel le premier module de commutation de sécurité (101) comprend une sortie de signal de commande et le deuxième module de commutation de sécurité (102) comprend une entrée de signal de commande et dans lequel la connexion l'élément (110a) est configuré pour connecter électriquement la sortie de signal de commande du premier module de commutation de sécurité (101) à l'entrée de signal de commande du deuxième module de commutation de sécurité (102).

10. Appareil de commutation de sécurité modulaire (100) selon la revendication 9, dans lequel le premier module de commutation de sécurité (101) est configuré pour fournir un signal de commutation fourni à la première sortie de signal de commutation (101c) à la sortie de signal de commande du premier module de sécurité, module de commutation de sécurité (101) en tant que deuxième signal de commande, et dans lequel le deuxième module de commutation de sécurité (102) est configuré pour fournir un signal de commutation à la deuxième sortie de signal de commutation (102c) du deuxième module de commutation de sécurité (102) qui est basé sur le signal de commutation envoyé à la première sortie de signal de commutation (101c) et un signal de commutation envoyé à une entrée de signal de commutation (102a) du deuxième module de commutation de sécurité (102).

11. Appareil de commutation de sécurité modulaire (100) selon la revendication 10, dans lequel le deuxième module de commutation de sécurité (102) comprend un élément logique de sécurité (102b) qui est configuré pour relier le signal de commutation fourni à la première sortie de signal de commutation (101c). au signal de commutation transmis à l'entrée de signal de commutation (102a) du deuxième module de commutation de sécurité (102) au moyen d'une opération ET logique ou d'une opération OU logique afin de générer le signal de commutation à transmettre à la deuxième sortie de signal de commutation (102c).

12. Appareil de commutation de sécurité modulaire (100) selon l'une des revendications précédentes, dans lequel l'un des modules de commutation de sécurité, en particulier le premier module de commutation de sécurité (101), comprend un dispositif d'alimentation (101d,e) afin de tension d'alimentation des modules de commutation de sécurité de l'appareil de commutation de sécurité modulaire (100).

13. Appareil de commutation de sécurité modulaire (100) selon la revendication 12, dans lequel le dispositif d'alimentation (101d,e) comprend une entrée de tension d'alimentation externe (101d) et une entrée de tension de référence externe (101e).

14. Appareil de commutation de sécurité modulaire (100) selon la revendication 12 ou 13, dans lequel l'élément de connexion (110a) comprend une première et une seconde connexion de tension d'alimentation interne et une première et seconde connexion de tension de référence interne.
